(19) Europäisches Patentamt
European Patent Office
Office européen des brevets

(11) Numéro de publication: **0 037 776**
**B1**

(12) # FASCICULE DE BREVET EUROPEEN

(45) Date de publication du fascicule du brevet: **18.07.84**

(21) Numéro de dépôt: **81400518.7**

(22) Date de dépôt: **31.03.81**

(51) Int. Cl.³: **H 01 M 10/36**, H 01 M 6/18, H 01 B 1/12

(54) **Electrolyte solide à base de matériau macromoléculaire à conduction ionique.**

(30) Priorité: **31.03.80 FR 8007135**

(43) Date de publication de la demande:
**14.10.81 Bulletin 81/41**

(45) Mention de la délivrance du brevet:
**18.07.84 Bulletin 84/29**

(84) Etats contractants désignés:
**DE GB NL**

(56) Documents cités:
**EP - A - 0 013 199**
**FR - A - 2 032 949**
**US - A - 3 551 211**
**US - A - 4 200 701**
**US - A - 4 230 604**

**JOURNAL OF POLYMER SCIENCE, Part C, no. 14, 1966, pages 313-322, J. MOACANIN et al.: "Effect of Polar Forces on the Viscoelastic Properties of Poly(propylene Oxide)"**

**JOURNAL OF POLYMER SCIENCE, vol. 14, 1976, pages 955-957, P.V. WRIGHT: "An Anomalous Transition to a Lower Activation Energy for dc Electrical Conduction above the Glass-Transition Temperature"**

**Le dossier contient des informations techniques présentées postérieurement au dépôt de la demande et ne figurant pas dans le présent fascicule.**

(73) Titulaire: **ETAT-FRANCAIS représenté par le DELEGUE GENERAL POUR L'ARMEMENT**
***Bureau des Brevets et Inventions de la Délégation* Générale pour l'Armement 14, rue Saint-Dominique**
**F-75997 Paris Armées (FR)**

(72) Inventeur: **André, Jean Daniel**
**3, rue Paul Doumer**
**F-38100 Grenoble (FR)**
Inventeur: **Killis, Andréas**
**6, rue d'Alsace**
**F-38000 Grenoble (FR)**
Inventeur: **Le Nest, Jean François**
**9 place Jean Moulin**
**F-38000 Grenoble (FR)**
Inventeur: **Cheradame, Hervé Marcel**
**12, Rue Boileau**
**F-38700 La Tronche (FR)**

(56) Documents cités
**JOURNAL OF APPLIED ELECTROCHEMISTRY, vol. 5, 1975, pages 63-69 G. FEUILLADE et al.: "Ion-conductive macromolecular gels and membranes for solid lithium cells"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un électrolyte solide, et plus particulièrement un électrolyte solide constitué par un matériau complexe élastomère réticulé procurant une bonne conductivité ionique et possèdant des propriétés mécaniques satisfaisantes.

Les solutions aqueuses utilisées classiquement comme électrolytes dans divers dispositifs tels que les batteries d'accumulateurs présentent l'inconvénient de provoquer des dégradations et sont difficiles à manipuler. Aussi, on a mis au point des électrolytes solides qui présentent un certain nombre d'advantages, dont la stabilité thermique, l'absence de corrosion des électrodes, la limitation de la poussée dendritique à la recharge, et un large domaine de stabilité redox qui permet de les associer à des couples très énergétiques et d'obtenir des générateurs électrochimiques de haute énergie massique. De plus, les électrolytes solides peuvent être préparés en couches minces permettant de diminuer la résistance interne des générateurs.

Toutefois, on n'a pas pu jusqu'à présent mettre au point des électrolytes solides constitués par des matériaux macromoléculaires à conduction ionique procurant des propriétés satisfaisantes permettant leur utilisation pratique, en raison principalement des faibles possibilités de déplacement des ions métalliques dans de tels réseaux macromoléculaires. On a tenté de remédier à ce défaut en préparant des membranes gonflées par un solvant de haute constante diélectrique assurant la solvation des ions et permettant leur déplacement dans le réseau. Cependant, si la conductivité ionique est améliorée, les propriétés mécaniques restent mauvaises et rendent de telles membranes inutilisables.

Le brevet français 2.032.949 est relatif à une pile sèche contenant un adhésif polymère qui établit une conduction ionique entre l'anode et la masse cathodique, et peut, dans un mode de réalisation, jouer le rôle d'électrolyte. Les adhésifs utilisés sont choisis parmi les matières polymères adhésives, conductrices et stables; on cite les produits de réaction entre la polyacrylamide l'urée et l'acétamide contenant une solution aqueuse de clorure de zinc et de chlorure d'ammonium.

Ce brevet ne concerne pas l'amélioration de la conductivité et les électrolytes polymères cités ont une structure différente de ceux de l'invention puiqu'ils sont constitués d'un polymére non réticulé et d'une solution aqueuse de sel.

Le brevet français 2.442.513 décrit des électrolytes constitués par des solutions solides de composés ioniques dissous au sein d'un matériau macromoléculaire plastique comportant des homo et/ou copolymères, essentiellement à chaînes non réticulées, dérivées d'un ou plusieurs monomères comportant un hétéroatome. A la différence des polymères de l'invention, ceux du brevet antérieur ne sont pas réticulés; tous les exemples mentionnés ont trait à des polymères non réticulés.

Le brevet américain 3.551.221 décrit une composition électrolytique destinée aux batteries sèches, constituée par un polymère dont la chaîne comprend des radicaux contenant au moins un atome capable de former une liaison hydrogène et au moins un atome d'hydrogène capable de participer à la liaison hydrogène. Les radicaux sont de longueur et de configuration géométrique telles que chacun d'eux peut former au moins une liaison hydrogène avec le radical adjacent. Il est indiqué que les matériaux préférés ont une structure telle qu'il n'y ait pas possibilité de réticulation, alors que les polymères utilisés dans l'invention sont réticulés. Enfin, la conductivité est assurée par les ions H+.

Le brevet américain 3.764.385 décrit des complexes conducteurs formés entre des sels de lithium et des agents chélants constitués par des amines tertiaires contenant au moins 2 atomes d'azote, monomères ou polymères, en présence de solvant.

En l'absence de solvant, le complexe devrait être utilisé à l'état fondu; ces complexes sont donc fondamentalement différents de ceux de l'invention qui sont des matériaux solides réticulés.

La présente invention a pour objet un matériau complexe élastomère réticulé chargè d'un ou plusieurs sels ionisables à conduction ionique élevée, utilisable comme électrolyte solide présentant une excellente conductivité ionique et possèdant de bonnes propriétés mécaniques.

L'invention a également pour objet un électrolyte solide constitué d'une membrane réticulée chargée d'un ou plusieurs sels ionisables à conduction ionique élevée, en absence d'eau ou de tout autre solvant, où le réseau macromoléculaire assure lui-même de rôle de solvatation et permet le déplacement des ions.

Enfin l'invention a pour objet un matériau complexe élastomère réticulé chargé d'un ou plusieurs sels ionisables présentant une très basse température de transition vitreuse et gardant à la température de travail un module d'élasticité suffisant.

L'électrolyte solide conforme à la présente invention est constitué par un matériau macromoléculaire à conduction ionique formé par des polymères ou oligomères comportant des hétéroatomes choisis parmi l'azote, l'oxygène, le soufre et le phosphore, et est caractérisé en ce qu'il est consitué par un réseau tridimensionnel assurant la solvatation d'un ou plusieurs sels ionisables en permettant le déplacement des ions, obtenu par réticulation des polymères ou oligomères comportant des fonctions réticulables, les hétéroatomes étant situés, dans le motif monomère ou dans les chaînes latérales, les polymères ou oligomères étant choisis parmi les copolymères statistiques, séquencés ou greffés ou des polycondensats séquencés ou greffés dérivés des éthers cycliques, du formaldéhyde, de l'acétaldéhyde, des aziridines ou de l'éthylène diamine ou une polyamine oxyéthylée, un polyoxyde d'éthylène diol de masse moléculaire comprise entre 150 et 3000, un polyoxyde de propylène diol de

masse moléculaire comprise entre 400 et 2000, un polyoxyde de propylène triol de masse moléculaire 1500, un copolymère triséquencé linéaire polyoxyde de propylène-polyoxyde d'éthylène de masse moléculaire comprise entre 2200 et 8350 tel que le pourcentage en masse de polyoxyde d'éthylène soit compris entre 40 et 80%, un polytétrahydrofuranne diol de masse moléculaire 1000, un polymère en étoile à quatre branche de formule:

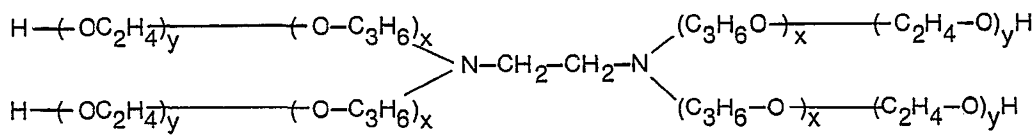

dont le poids moléculaire est compris entre 1650 et 12000, dans lequel x et y sont tels que l'ensemble des séquences polyoxyde d'éthylène représente entre 40 et 70% en masse de l'ensemble, le rapport du nombre d'atomes de carbone au nombre d'atomes de carbone au nombre d'hétéroatomes dans les polymères ou oligomères étant compris entre 1 et 12, le rapport du nombre des cations du sel ionisable au nombre d'hétéroatomes des polymères ou oligomères étant compris entre 1 et 30%.

Ces copolymères ou oligomères, utilisés isolément ou en combinaison, comportent des fonctions réticulables selon les techniques classiques, telles que des fonctions alcools primaires ou secondaires, des fonctions acides, des fonctions amines ou des doubles liaisons carbone-carbone, ainsi que des hétéroatomes tels que l'oxygène, l'azote, le soufre et le phosphore. Ces hétéroatomes ont pour rôle d'interagir par leurs doublets libres avec les cations métalliques des sels afin de les solvater. Ils doivent être en nombre suffisant pour permettre leur déplacement à travers l'ensemble du système.

Il est tout particulièrement avantageux conformément à la présente invention de combiner divers hétéroatomes tels que l'oxygène et l'azote, comme dans le cas des polyamines oxyéthylées.

Conformément à la présente invention, on utilise des polymères ou oligomères présentant des températures de transition vitreuse aussi basses que possible. Cette caractéristique peut être avantageusement obtenue en mélangeant deux ou plusieurs polymères, le cas échéant, suivant les techniques usuelles. On préfère tout particulièrement les copolymères séquencés à séquences courtes ou les copolymères greffés à greffons latéraux courts, ou les copolymères statistiques linéaires ou greffés.

Les sels ionisables utilisés dans l'invention sont des sels de métaux alcalins tels que des sels de lithium, sodium, potassium, rubidium ou césium. Les anions associés aux cations métalliques dans ces sels sont des bases faibles tells que les anions $CF_3SO_3^-$, $AsF_6^-$, $PF_6^-$, $ClO_4^-$, $SCN^-$, $I^-$, $Br^-$, $(C_6H_5)_4B^-$ ainsi que ses dérivés, $BF_4^-$, $BCl_4^-$.

Les nouveaux matériaux complexes élastomères réticulés à conduction ionique suivant l'invention sont préparés par dissolution du sel ionisable en quantité appropriée dans le polymère ou l'oligomère de base, puis, lorsque le système polymère-sel est homogène, par réticulation selon les techniques usuelles.

Le sel ionisable est dissous en une quantité telle que le rapport du nombre de cations métalliques au nombre des hétéroatomes chargés de les solvater soit compris entre 1 et 30% et de préférence entre 5 et 10%. On peut faire varier ce rapport dans les limites indiquées ci-dessus en fonction de la température d'utilisation prévue et du module d'élasticité du matériau désiré. Une concentration en sel supérieure à la limite indiquée ci-dessus ne permet pas d'obtenir une conductivité ionique satisfaisante, en raison de l'interaction avec des dipôles du réseau macromoléculaire assurant la solvatation, qui devient trop importante et tend à figer le système. Inversement une concentration inférieure à 1% ne permet pas d'obtenir des résultats suffisants.

Le cas échéant, la dissolution du sel peut être facilitée par la présence d'un solvant qu'on élimine ultérieurement par évaporation.

La réticulation s'effectue aisément lorsque les polymères de base utilisés portent en particulier des groupements alcools primaires ou secondaires et amines primaires, à l'aide de di-, tri- ou polyisocyanate catalysé par exemple par le dibutyldilaurate d'étain. Toutefois, tout procédé usuel de réticulation peut être employé, par exemple au moyen de dichlorures d'acides, d'anhydrides d'acides ou de diépoxydes.

Le degré de réticulation est contrôlé suivant les techniques connues afin d'obtenir la densité de réticulation qui procure la meilleure conductivité ionique compte tenu du module d'élasticité souhaité à la température de travail, sachant que la conductivité ionique décroit avec la densité de réticulation tandis que le module d'élasticité croît. Une densité de réticulation trop élevée peut améliorer la résistance mécanique, mais entraine une élévation de la température de transition vitreuse, et doit donc être évitée.

La réticulation permet d'obtenir un matériau macromoléculaire macroscopiquement isotrope et stable à des températures élevées, avec des mélanges de polymères solvatants incompatibles entre eux, le mélange de ces polymères conduisant à une plus basse température de transition vitreuse. Afin d'obtenir la conductivité ionique la plus élevée pour un sel ionisable donné, à une concentration donnée,

il est avantageux suivant l'invention d'obtenir la température de transition vitreuse la plus basse possible, comme indiqué ci-dessus.

Il convient de noter que des structures macromoléculaires convenablement choisies comme indiqué ci-dessus, combinées avec les sels ionisables spécifiquement décrits ci-dessus, conformément à la présente invention, permettent d'obtenir des conductivités ioniques supérieures à $10^{-5}(\Omega cm)^{-1}$ à 100°C.

Ce résultat peut paraître inattendu car il était communément admis dans ce domaine technique que le fait de disposer d'un réseau réticulé entraîne nécessairement une forte diminution de la mobilité des ions, de même que l'introduction de sels ionisables dans un tel réseau doit augmenter les interactions entre les divers constituants et contribuer à figer le système.

De plus, il était admis, selon les techniques connues, que le fait de disposer de macromolécules linéaires à atomes ou groupement d'atomes solvatants était la condition nécessaire pour pouvoir obtenir une haute conductivité ionique. Au contraire conformément à la présente invention les conductivités ioniques les plus élevées sont obtenues avec des réseaux tridimensionnels réticulés chargés, gardant une bonne élasticité à la température à laquelle la conductivité est mesurée. On constate donc que la combinaison d'un réseau élastomère solvatant et d'un ou plusieurs sels constituant une charge fournissant par ionisation des cations dont le déplacement permet le passage du courant électrique, procure une très bonne conductivité ionique.

Les caractéristiques des matériaux conformes à l'invention décrits ci-dessus permettent leur application comme électrolytes solides, notamment dans les générateurs électochimiques ou dans les cellules de mesures potentiométriques.

Les exemples suivants illustrent l'invention.

Exemple 1

30 g d'un copolymère tri séquencé linéaire polyoxyde de propylène-polyoxyde d'éthylène, à séquence centrale polyoxyde de propylène, de masse moléculaire 2200, tel que le pourcentage d'oxyde d'éthylène soit 40% du total, sont mélangés à 3 g de tétraphényle borure de sodium dans 10 ml de chlorure de méthylène. Ensuite 3,34 g de triisocyanate de triphénylèneméthane sont introduits dans le milieu, puis $5.10^{-2}$ ml de dibutyle dilaurate d'étain. Le mélange réactionnel, après agitation, est alors coulé sous azote dans un moule constitué de deux plaques de verre séparées par un joint. Après 24h de réaction à température ordinaire, les membranes sont mises à sécher sous vide à 80°C jusqu'à poids constant.

Conductivité à 100°C $\sigma = 1.10^{-4}$ $(\Omega cm)^{-1}$

à 50°C $\sigma = 1.10^{-5}$ $(\Omega cm)^{-1}$

Module d'élasticité:
$45.10^5$ Pa à −25°C

Exemple 2

30 g d'un copolymère triséquencé linéaire polyoxyde de propylène-polyoxyde d'éthylène, à séquence centrale polyoxyde de propylène, de masse moléculaire 8350, tel que le pourcentage de polyoxyde d'éthylène soit 80% du total, sont mélangés à 3 g de tétraphényle borure de sodium dans 20 ml de chlorure de méthylène. Ensuite 0,88 g de triisocyanate de triphénylméthane sont introduits dans le milieu, puis $5.10^{-2}$ ml de dibutyle dilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 6.10^{-4}$ $(\Omega cm)^{-1}$

à 50°C $\sigma = 1.10^{-4}$ $(\Omega cm)^{-1}$

Module d'élasticité:
$2.10^5$ Pa à −10°C.

Exemple 3

30 g d'un polymère en étoile à quatre branches, de masse moléculaire égale à 1650, de formule:

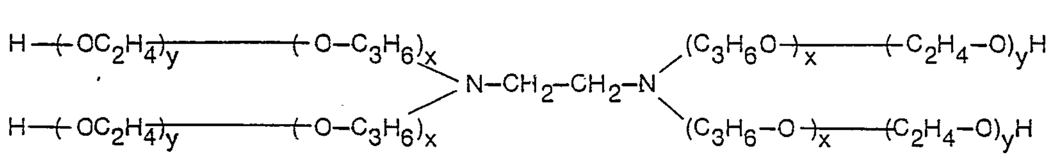

dans lequel l'ensemble des séquences polyoxyde d'éthylène représente 40% de l'ensemble, sont mélangés à 3 g de tétraphényle borure de sodium dans 10 ml d'acétate d'éthyle. Ensuite 6,1 g d'hexaméthylène diisocyanate sont introduits dans le milieu, puis $5.10^{-2}$ ml de dibutyldilaurate d'étain. Le mélange réactionnel, après agitation, est alors coulé sous azote dans un moule constitué de deux plaques de verre séparées par un joint. Après 24h de réaction à température ordinaire, les membranes sont mises à sécher sous vide à 80°C jusqu'à poids constant.

Conductivité à 100°C: $\sigma = 1.10^{-5}$ $(\Omega cm)^{-1}$

à 50°C: $\sigma = 5.10^{-6}$ $(\Omega cm)^{-1}$

Module d'élasticité:
$7.10^5$ Pa à −15°C

Exemple 4

30 g d'un polymère en étoile de masse moléculaire égale à 1650, à quatre branches de formule:

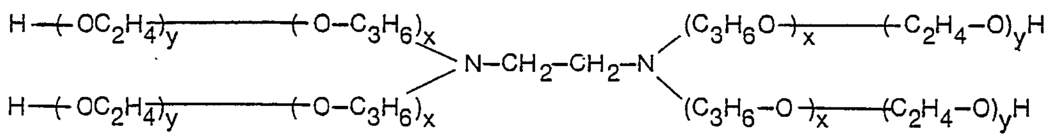

dans lequel l'ensemble des séquences polyoxyde d'éthylène représente 40% de l'ensemble, sont mélangés à 0,71 g de thiocyanate de sodium dans 10 ml d'acétate d'éthyle. Ensuite 6,1 g d'hexaméthylène diisocyanate sont introduits dans le milieu, puis $5.10^{-2}$ ml de dibutyle dilaurate d'étain. Le mélange réactionnel, après agitation, est alors coulé sous azote dans un moule constitué de deux plaques de verre séparées par un joint. Après 24 heures de réaction à température ordinaire les membranes sont mises à sécher sous vide à 80°C jusqu'à poids constant.

Conductivité à 100°C: $\sigma = 1.10^{-5}$ $(\Omega cm)^{-1}$

Module d'élasticité:
$6.10^5$ Pa à −15°C

Exemple 5

30 g d'un polymère en étoile de masse moléculaire égale à 3400 à quatre branches, de fomule:

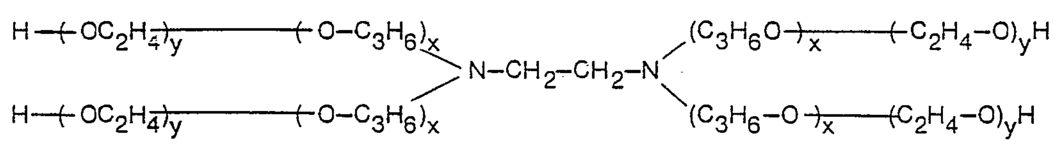

dans lequel l'ensemble des séquences polyoxyde d'éthylène représente 40% du total, sont mélangés à 1,5 g de trifluorométhanesulfonate de lithium dans 20 ml d'acétate d'éthyle. Ensuite 2,9 g d'hexaméthylène diisocyanate sont introduits dans le milieu, puis $5.10^{-2}$ ml de dibutyle dilaurate d'étain. Le mélange réactionnel après agitation, est alors coulé sous azote dans un moule constitué de deux plaques de verre séparées par un joint. Après 24 heures de réaction à température ordinaire, les membranes sont mises à sécher sous vide à 80°C jusqu'à poids constant.

Conductivité à 100°C $1.10^{-5}$ $(\Omega cm)^{-1}$

Module d'élasticité:
$6.10^5$ Pa à −15°C

Exemple 6

30 g d'un polymère de masse égale à 12000, en étoile à quatre branches de formule:

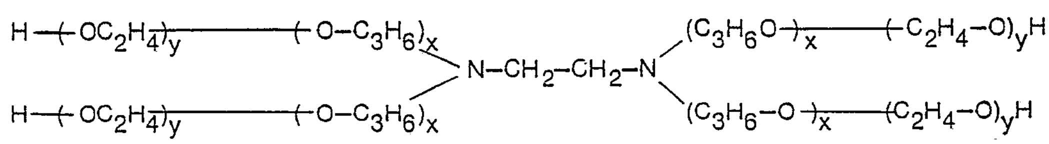

dans lequel l'ensemble des séquences polyoxyde d'éthylène représente 70% du total, sont mélangés à

3 g de tétraphényleborure de sodium dans 30 ml d'acétate d'éthyle et 10 ml d'acétonitrile. Ensuite 0,85 g d'hexaméthylène diisocyanate sont introduits dans le milieu, puis $5.10^{-2}$ ml de dibutyle dilaurate d'étain. Le mélange réactionnel, après agitation, est alors coulé sous azote dans un moule constitué de deux plaques de verre séparées par un joint. Après 24 heures de réaction à température ordinaire, les membranes sont mises à sécher sous vide à 80°C jusqu'à poids constant.

Conductivité à 100°C: $\sigma = 6.10^{-4}$ $(\Omega cm)^{-1}$

à 50°C: $\sigma = 9.10^{-5}$ $(\Omega cm)^{-1}$

Module d'élasticité:
$2.10^5$ Pa à —15°C

Exemple 7

2,5 g de copolymère triséquencé linéaire polyoxyde de propylène-polyoxyde d'éthylène, à séquence centrale polyoxyde de propylène, de masse moléculaire 2200, tel que le pourcentage d'oxyde d'éthylène soit 40% du total, sont mélangés à 0,27 g de tétraphényle-borure de sodium dans 25 ml d'acétate d'éthyle, pendant 15 minutes environ. Après avoir ajouté 9,5 ml d'une solution de 0,21 g de nitrocellulose dans l'acétate d'éthyle, le milieu réactionnel est concentré à pression ordinaire et sous azote à 10 ml environ. On ajoute à température ordinaire 0,30 ml d'hexaméthylène diisocyanate et $5.10^{-2}$ ml de dibutyle dilaurate d'étain. Le mélange réactionnel, après agitation, est alors coulé sous azote dans un moule constitué de deux plaques de verre séparées par un joint. Après 24 heures de réaction à température ordinaire, les membranes sont mises à sécher sous vide à 50°C jusqu'à poids constant.

Conductivité $5.10^{-5}$ $(\Omega cm)^{-1}$ à 100°C

Module d'élasticité:
$10^5$ Pa à 20°C.

Exemple 8

10 g de polyoxyde d'éthylène diol, de masse moléculaire 400, sont mélangés à 2,68 g de tétraphénylborure de sodium dans 7 $cm^3$ de chlorure de méthylène. Ensuite 6,12 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 2,0.10^{-6}$ $(\Omega cm)^{-1}$

à 70° $\sigma = 7,9.10^{-8}$ $(\Omega cm)^{-1}$

Module d'élasticité à 20°C: $5,0.10^5$ Pa

Exemple 9

10 g de polyoxyde d'éthylène diol, de masse moléculaire 600, sont mélangés à 2,68 g de tétraphénylborure de sodium dans 7 $cm^3$ de chlorure de méthylène. Ensuite 4,08 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1,0.10^{-5}$ $(\Omega cm)^{-1}$

à 70° $\sigma = 2,0.10^{-6}$ $(\Omega cm)^{-1}$

Module d'élasticité à 20°C: $3,7.10^5$ Pa

Exemple 10

10 g de polyoxyde d'éthèlène diol, de masse moléculaire 1000, sont mélangés à 2,68 g de tétraphénylborure de sodium dans 7 $cm^3$ de chlorure de méthylène. Ensuite 2,45 g de triisocyanate de triphénylène méthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 2,5.10^{-5}$ $(\Omega.cm)^{-1}$

à 70° $\sigma = 5,0.10^{-6}$ $(\Omega.cm)^{-1}$

Module d'élasticité à 20°C: $2,0.10^{5}$ Pa

Exemple 11

10 g de polyoxyde d'éthylène diol, de masse moléculaire 1500, sont mélangés à 2,68 g de tétraphénylborure de sodium dans 7 $cm^3$ de chlorure de méthylène. Ensuite 1,64 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1,3.10^{-4}$ $(\Omega.cm)^{-1}$

à 70° $\sigma = 3,2.10^{-5}$ $(\Omega.cm)^{-1}$

Module d'élasticité à 20°C: $1,7.10^{5}$ Pa

Exemple 12

10 g de polyoxyde d'éthylène diol, de masse moléculaire 3000, sont mélangés à 2,68 g de tétraphénylborure de sodium dans 7 $cm^3$ de chlorure de méthylène. Ensuite 0,82 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1,6.10^{-4}$ $(\Omega.cm)^{-1}$

à 70° $\sigma = 4,0.10^{-5}$ $(\Omega.cm)^{-1}$

Module d'élasticité à 20°C: $5,0.10^{5}$ Pa

Exemple 13

10 g de polyoxyde d'éthylène diol, de masse moléculaire 3000, sont mélangés avec 0,42 g de tétraphénylborure de lithium dans 7 $cm^3$ de chlorure de méthylène. Ensuite 0,82 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 4,0.10^{-5}$ $(\Omega.cm)^{-1}$

à 70° $\sigma = 1,6.10^{-5}$ $(\Omega.cm)^{-1}$

Module d'élasticité à 20°C: $5,0.10^{5}$ Pa

Exemple 14

10 g de polyoxyde d'éthylène diol, de masse moléculaire 3000, sont mélangés avec 0,8 g de perchlorate de lithium dans 7 $cm^3$ de chlorure de méthylène. Ensuite 0,82 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 4,0.10^{-4}$ $(\Omega.cm)^{-1}$

à 70° $\sigma = 1,6.10^{-4}$ $(\Omega.cm)^{-1}$

Module d'élasticité à 20°C: $5,0.10^{5}$ Pa

Exemple 15

10 g de polyoxyde d'éthylène diol, de masse moléculaire 1000, sont mélangés avec 0,8 g de perchlorate de lithium dans 7 $cm^3$ de chlorure de méthylène. Ensuite 2,45 g de triisocyanate de

triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1{,}6.10^{-4}$ $(\Omega.cm)^{-1}$

à 70° $\sigma = 5{,}0.10^{-5}$ $(\Omega.cm)^{-1}$

Module d'élasticité à 20°C: $2{,}0.10^5$ Pa

Exemple 16

10 g de polytétrahydrofuranne diol, de masse moléculaire 1000, sont mélangés avec 0,8 g de perchlorate de lithium dans 7 $cm^3$ de chlorure de méthylène. Ensuite 2,45 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 7{,}9.10^{-6}$ $(\Omega.cm)^{-1}$

à 70° $\sigma = 2{,}0.10^{-6}$ $(\Omega.cm)^{-1}$

Module d'élasticité à 20°C: $2{,}0.10^6$ Pa

Exemple 17

10 g de polyoxyde de propylène diol, de masse moléculaire 400, sont mélangés avec 2 g de tétraphénylborure de sodium dans 7 $cm^3$ de chlorure de méthylène. Ensuite 6,12 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 2{,}0.10^{-7}$ $(\Omega.cm)^{-1}$

à 70° $\sigma = 1{,}0.10^{-8}$ $(\Omega.cm)^{-1}$

Module d'élasticité à 20°C: $1{,}0.10^8$ Pa

Exemple 18

10 g de polyoxyde de propylène diol, de masse moléculaire 1000, sont mélangés avec 2 g de tétraphénylborure de sodium dans 7 $cm^3$ de chlorure de méthylène. Ensuite 2,45 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1{,}0.10^{-5}$ $(\Omega.cm)^{-1}$

à 70° $\sigma = 1{,}3.10^{-6}$ $(\Omega.cm)^{-1}$

Module d'élasticité à 20°C: $5{,}0.10^5$ Pa

Exemple 19

10 g de polyoxyde de propylène diol, de masse moléculaire 2000, sont mélangés avec 2 g de tétraphénylborure de sodium dans 7 $cm^3$ de chlorure de méthylène. Ensuite 1,23 g de triisocyanate de triphénylèneméthane sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1,0.10^{-4}$ $(\Omega.cm)^{-1}$

à 70° $\sigma = 1,0.10^{-5}$ $(\Omega.cm)^{-1}$

Module d'élasticité à 20°C: $4,0.10^{5}$ Pa

Exemple 20

10 g de polyoxyde de propylène triol, de masse moléculaire 1500, sont mélangés avec 2 g de tétraphénylborure de sodium dans 7 $cm^3$ de chlorure de méthylène. Ensuite 1.70 g d'hexaméthylène diisocyanate sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 3,2.10^{-5}$ $(\Omega.cm)^{-1}$

à 70° $\sigma = 5,0.10^{-6}$ $(\Omega.cm)^{-1}$

Module d'élasticité à 20°C: $5,0.10^{5}$ Pa

Exemple 21

7,5 g de polyoxyde de propylène diol, de masse moléculaire 1000, et 5 g de polyoxyde de propylène triol, de masse moléculaire 1500, sont mélangées avec 2,5 g de tétraphénylborure de sodium dans 7 $cm^3$ de chlorure de méthylène. Ensuite 2,1 g d'hexaméthylène diisocyanate sont introduits dans le milieu, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 4,0.10^{-5}$ $(\Omega.cm)^{-1}$

à 70° $\sigma = 1,3.10^{-5}$ $(\Omega.cm)^{-1}$

Module d'élasticité à 20°C: $2,0.10^{5}$ Pa

Exemple 22

10 g d'un copolymère triséquencé linéaire polyoxyde de propylènepolyoxyde d'éthylène, à séquence centrale polyoxyde de propylène, de masse moléculaire 8350, tel que le pourcentage de polyoxyde d'éthylène, soit 80% du total, sont mélangés avec 1,2 g de perchlorate de lithium dans 7 $cm^3$ de chlorure de méthylène. Ensuite 0,39 g de triisocyanate aliphatique sont introduits dans le mélange, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 1,6.10^{-3}$ $(\Omega.cm)^{-1}$

à 70° $\sigma = 8,5.10^{-4}$ $(\Omega.cm)^{-1}$

Module d'élasticité à 20°C: $1,0.10^{5}$ Pa

Exemple 23

10 g de polyoxyde d'éthylène diol, de masse moléculaire 600, et 3,9 g de polyoxyde d'éthylène diol, de masse moléculaire 150, et 0,67 g de triméthylol propane sont mélangés avec 2 g de tétraphénylborure de sodium dans 7 $cm^3$ de chlorure de méthylène. Ensuite 8,4 g d'hexaméthylène diisocyanate sont introduits dans le mélange, puis $5.10^{-2}$ $cm^3$ de dibutyldilaurate d'étain. Le mélange réactionnel, après agitation, est alors coulé sous azote dans un moule constitué de deux plaques de verre séparées par un joint. Après 24 h de réaction à température ordinaire, les membranes sont mises à sécher sous vide à 80°C jusqu'à poids constant.

Conductivité à 100°C $\sigma = 4,0.10^{-5}$ $(\Omega.cm)^{-1}$

à 70° $\sigma = 1,0.10^{-5}$ $(\Omega.cm)^{-1}$

Module d'élasticité à 20°C: $1,7.10^{6}$ Pa

## Revendications

1. Electrolyte solide constitué par un matériau macromoléculaire à conduction ionique formé par des polymères ou oligomères comportant des hétéroatomes choisis parmi l'azote, l'oxygène, le soufre et le phosphore, caractérisé en ce qu'il est constitué par un réseau tridimensionnel assurant la solvatation d'un ou plusieurs sels ionisables en permettant le déplacement des ions, obtenu par réticulation des polymères ou oligomères comportant des fonctions réticulables, les hétéroatomes étant situés, dans le motif monomère ou dans les chaînes latérales, les polymères ou oligomères étant choisis parmi les copolymères statistiques, séquencés ou greffés ou des polycondensats séquencés ou greffés dérivés des éthers cycliques, du formaldéhyde, de l'acétaldéhyde, des aziridines ou de l'éthylène diamine ou une polyamine oxyéthylée, un polyoxyde d'éthylène diol de masse moléculaire comprise entre 150 et 3000, un polyoxyde de propylène diol de masse moléculaire comprise entre 400 et 2000, un polyoxyde de propylène triol de masse moléculaire 1500, un copolymère triséquencé linéaire polyoxyde de propylène-polyoxyde d'éthylène de masse moléculaire comprise entre 2200 et 8350 tel que le pourcentage en masse de polyoxyde d'éthylène soit compris entre 40 et 80%, un polytétrahydrofuranne diol de masse moléculaire 1000, un polymère en étoile à quatre branches de formule:

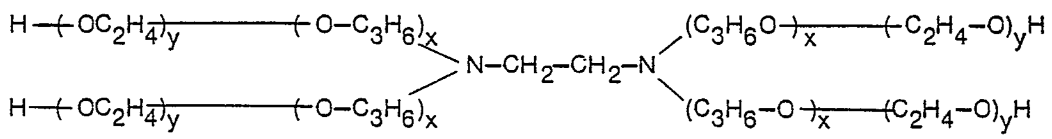

dont le poids moléculaire est compris entre 1650 et 12000, dans lequel x et y sont tels que l'ensemble des séquences polyoxyde d'éthylène représente entre 40 et 70% en masse de l'ensemble, le rapport du nombre d'atomes de carbone au nombre d'hétéroatomes dans les polymères ou oligomères étant compris entre 1 et 12, le rapport du nombre des cations du sel ionisable au nombre d'hétéroatomes des polymères ou oligomères étant compris entre 1 et 30%.

2. Electrolyte solide selon la revendication 1, caractérisé en ce qu'il est formé à partir d'un mélange de plusieurs polymères ou oligomères réticulables.

3. Electrolyte solide selon la revendication 1 ou 2, caractérisé en ce que les sels ionisables sont des sels de métaux alcalins choisis parmi les sels de lithium, de sodium, de potassium, de rubidium ou de césium.

4. Electrolyte solide selon la revendication 3, caractérisé en ce que l'anion associé au cation métallique dans le sel est choisi parmi $CF_3SO_3^-$, $AsF_6^-$, $PF_6^-$, $ClO_4^-$, $SCN^-$, $I^-$, $Br^-$, $(C_6H_5)_4B^-$ ainsi que ses dérivés, $BF_4^-$, $BCl_4^-$.

## Patentansprüche

1. Fester Electrolyte, der aus einem makromolekularen, durch unter dem Stichstoff dem Sauerstoff, dem Schwefel und dem Posphor gewählte Heteroatome umfassende Polymere oder Oligomere gebildetem Material mit Ionenleitung aufgebaut ist dadurch gekennzeichnet, dass er duch ein dreidimensionales, eine Solvatation von einem oder mehreren ionisierbaren Salzen durch die Ermöglichung von Ionenwanderungen gewährleistende, durch Vernetzung der vernetzungsfähige Funktionen aufweisenden Polymere bzw. Oligomere gewonnene Netzgebilde gebildet ist, wobei die Heteroatome im monomeren Grundgebilde bzw. in Seitenketten gelagert sind, die Polymeren bzw. Oligomeren unter den statistischen, sequentiellen oder gepropften Copolymeren oder sequentiellen oder gepropften, von den zyklischen Äthern vom Formaldehyd, vom Acetaldehyd, von Aziridinen bzw. vom Äthylendiamin abgeleiteten Polykondensaten oder einem Oxyäthylpolyamin, einem Polyäthylendioloxid mit einer zwischen 150 und 3000 liegenden Molekülmasse, einem Polypropylendioloxid mit einer zwischen 400 und 2000 liegenden Molekülmasse, einem Polypropylentrioloxid mit einer Molekülmasse von 1500, einem linearen dreifachsequentiellen Copolymer aus Polypropylen- und Polyäthylenoxid mit einer zwischen 2200 und 8350 derart liegenden Molekülmasse, dass der prozentuale Massenanteil des Polyoxyäthylenes zwischen 40 und 80% liegt, einem Polytetrahydrofurfuryldiol mit einer Molekülmasse von 1000, einem sternförmig vierfach verzweigten Polymer mit der Formel:

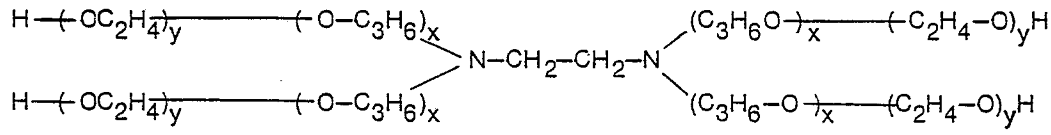

und einem zwischen 1650 und 12000 liegenden Molekülgewicht, worin x und y derart gewählt sind, dass die Gesamtheit der Polyäthylenoxidsequenzen massenmässig zwischen 40 und 70% der Gesamtmasse darstellt, gewählt sind, und wobei das Verhältnis der Kohlenstoffatomanzahl zur Anzahl der

Heteroatome in den Polymeren bzw. Oligomeren zwischen 1 und 12 und das Verhältnis der Kationenanzahl des ionisierbaren Salzes zur Anzahl der Heteroatome in den Polymeren bzw. Oligomeren zwischen 1 und 30% liegt.

2. Fester Elektrolyt nach Anspruch 1 dadurch gekennzeichnet, dass er von einer Mischung aus mehreren vernetzungsfähigen Polymeren bzw. Oligomeren ausgehend gebildet wird.

3. Fester Elektrolyt nach Anspruch 1 oder 2 dadurch gekennzeichnet, dass die ionisierbaren Salze Alkalimetallsalze sind, die unter Lithium-, Natrium-, Kalium-, Rubidium- oder Cäsiumsalzen gewählt werden.

4. Fester Elektrolyt nach Anspruch 3 dadurch gekennzeichnet, dass das das im Salz dem metallischen Kation zugeordnete Anion unter $CF_3SO_3^-$, $AsF_6^-$, $PF_6^-$, $ClO_4^-$, $SCN^-$, $I^-$, $Br^-$, $(C_6H_5)_4B^-$ sowie dessen Derivaten, $BF_4^-$, $BCl_4^-$ gewählt wird.

**Claims**

1. Solid electrolyte constituted by a macromolecular material of ionic conduction formed by polymers or oligomers containing heteroatoms selected from among nitrogen, oxygen, sulfur and phosphorus, characterized by the fact that it is formed by a three-dimensional networks assuring the solvation of one or more ionizable salts and permitting the displacement of the ions, obtained by cross-linking of polymers or oligomers having cross-linkable functions, the heteroatoms being in the monomer unit or in the side chains, the polymers or oligomers being selected from sequenced or grafted statistical copolymers or sequenced or grafted polycondensate derived from cyclic ethers, formaldehyde, acetaldehyde, aziridines or ethylenediamine or an oxyethylated polyamine, an ethylene diol polyoxide having a molecular weight between 150 and 3000, a propylene diol polyoxyde having a molecular weight between 400 and 2000, a propylene triol polyoxide having a molecular weight of 1500, a linear trisequenced copolymer of propylene polyoxide-ethylene polyoxide having a molecular weight between 2200 and 8350 so that the precentage of ethylene polyoxide being between 40 and 80% of the total, a polytetrahydrofurane diol having molecular weight of 1000, a four branch star polymer of the formula:

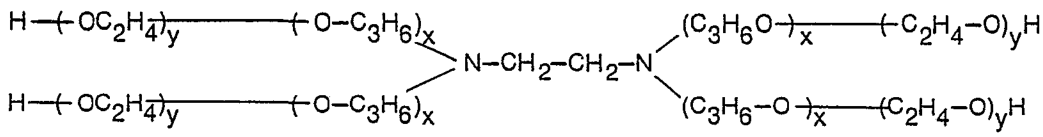

having a molecular weight between 1650 and 12000, in which x and y being so that all the ethylene-polyoxide sequences together represents between 40 and 70% of the total, the ratio of the number of carbon atoms to the number of heteroatoms in the polymers or oligomers being between 1 and 12, the ratio of the number of metal cations of the ionizable salt to the number of heteroatoms in the polymers or oligomers being between 1 and 30%.

2. Solid electrolyte according to claim 1, characterized by the fact it is formed from a mixture of several polymers or oligomers.

3. Solid electrolyte according to claim 1 or 2, characterized by the fact that the ionizable salts are salts of alkali metals, selected from among the salts of lithium, sodium, potassium, rubidium or cesium.

4. A solid electrolyte according to claim 3, characterized by the fact that the anion associated with the metallic cation in the salt is selected from among $CF_3SO_3^-$, $AsF_6^-$, $ClO_4^-$, $SCN^-$, $I^-$, $Br^-$, $(C_6H_5)_4B^-$ as well as its derivatives, $BF_4^-$, $BCl_4^-$.